# EUROPÄISCHE PATENTANMELDUNG

(11) **EP 4 729 766 A1**
(43) Veröffentlichungstag der Anmeldung: **22.04.2026**
(21) Anmeldenummer: 25208781.2
(22) Anmeldetag: 15.10.2025
(51) Int. Cl.: F03D 7/04, F03D 17/00

(54) **VERFAHREN UND VORRICHTUNG ZUM BESTIMMEN VON BETRIEBSPARAMETERN EINER WINDENERGIEANLAGE**

(30) Priorität: 18.10.2024 DE 102024210126
(71) Anmelder: Rössler, Jochen, 91583 Schillingsfürst (DE)
(72) Erfinder: Rössler, Jochen, 91583 Schillingsfürst (DE)
(74) Vertreter: Prüfer & Partner mbB Patentanwälte · Rechtsanwälte

(57) **Zusammenfassung**

Ein Verfahren zur Bestimmung von Betriebszuständen einer Windenergieanlage (2) umfasst das Bereitstellen eines Kl-Modells (10), wobei das Kl-Modell 10 trainierbar ist, um auf der Basis von eingelesenen Daten, die aktuelle und/oder künftige Umweltparameter (11a) und/oder Regeldaten (12a) beinhalteten, zumindest einen aktuellen und/oder künftigen Betriebszustand der Windenergieanlage (2) zu bestimmen, das Bestimmen des zumindest einen aktuellen und/oder zukünftigen Betriebszustandes (13) der Windenergieanlage (2) mithilfe des KI-Modells (10) auf Basis der eingelesenen Umweltparametern (11a) und/oder Regeldaten (12a).

## Beschreibung

Die vorliegende bezieht sich auf ein Verfahren und eine Vorrichtung zum Bestimmen von Betriebszuständen einer Windenergieanlage.

Die Bestimmung der erzeugten Energie einer Windenergieanlage in einer gewissen Zeiteinheit ist für die Synchronisation zwischen Stromerzeugern und Verbraucher, insbesondere für die Stabilität von Stromnetzen und die Abschätzung der Erzeugung von elektrischem Strom, sowohl für Stromverbraucher sowie Erzeuger wichtig. Wenn die erwartete Energiemenge nicht genau prognostiziert wird, kann dies zu Überlastungen oder fehlender Leistung im Stromnetz führen, was die Stabilität gefährdet. Dabei ist es entscheidend, die voraussichtliche erzeugte Energie einer Windenergieanlage oder ganzer Windparks, welche eine Mehrzahl von Windenergieanlagen umfassen, zu einem gewissen Zeitpunkt in der Zukunft bestmöglich zu bestimmen.

Darüber hinaus ist es wichtig, die Windenergieanlagen in ihrer Laufzeit zu optimieren, um Rentabilität zu gewährleisten. Eine genaue Prognose der Energiemenge ermöglicht es den Betreibern, den Betrieb der Windenergieanlagen entsprechend anzupassen, um die maximale Rentabilität zu erzielen. Dies kann beispielsweise bedeuten, die Wartung und Reparaturzeiten zu optimieren oder die Stromproduktion während Zeiten hoher Nachfrage zu maximieren.

Neben Wetterdaten, die die erzeugte Energiemenge einer Windenergieanlage oder eines ganzen Windparks beeinflussen, gibt es gesetzliche Vorgaben, die sich auf die erzeugte Energiemenge auswirken können und die beispielsweise dem Artenschutz gefährdeter Tierarten dienen, beispielsweise von Fledermäusen oder Greifvögeln wie dem Rotmilan. Dazu müssen in Windparks, die beispielsweise eine Mehrzahl von Windenergieanlagen umfassen können, Abschaltalgorithmen umgesetzt werden, die die Windenergieanlagen zu Zeiten, in denen mit einer erhöhten Gefährdung dieser Tiere zu rechnen ist, abschalten.

So beschreibt DE 10 2014 226 979 A1 beispielsweise ein Verfahren zu Steuerung von Windenergieanlagen basierend auf Wetterdaten. Eine Steuereinheit liest die aktuelle Uhrzeit sowie Umweltparameter an jeder Anlage ein. Anhand dieser Daten werden Gesamtwerte berechnet und verschiedene Bedingungen abgefragt, darunter Niederschlagsmenge und Grenzwerte für Temperatur und Windgeschwindigkeit. Erfüllen die Bedingungen gewisse Grenzwerte, werden die Anlagen entweder ein oder ausgeschaltet.

Weitere Auflagen oder Vorschriften zum Schutz von Tieren oder Anwohnern, wie beispielsweise die Schallreduzierung von Windrädern oder die Schattenabschaltung von Windenergieanlagen oder Windparks resultieren auch in einer notwendigen Abschaltung oder Leistungsdrosselung einer oder mehrerer Windenergieanlage(n), was zu einer Verringerung der erzeugten Energiemenge führt.

Dabei sind die Zeitpunkte für auflagenbedingte Abschaltungen der Windenergieanlagen oder Windparks von einer entscheidenden Rolle. Netzbetreiber oder Direktvermarkter von elektrischer Energie haben Wettermodelle und Windparkleistungsdaten. Damit können diese die zukünftig zu Verfügung stehende erneuerbare Energiemenge relativ exakt vorhersagen. Welche Leistung der Windpark aber wegen genehmigungsrelevanter Abschaltungen nicht erbringen kann, können diese nicht vorhersagen und diese Lücke soll die vorliegende Erfindung schließen. Auch wenn bestimmte Ereignisse eine Optimierung des Windparks erwirken und somit eine angedachte Abschaltung nicht umgesetzt wird, sind diese Informationen für die Direktvermarkter und Netzbetreiber wichtig, weil vielleicht mehr Energie zur Verfügung steht, also gebraucht wird.

Die Aufgabe der vorliegenden Erfindung besteht darin, ein Verfahren und eine Vorrichtung zur Bestimmung von aktuellen und/oder künftigen Betriebszuständen einer Windenergieanlage wie beispielsweise einer Abschaltung oder einer Leistungsdrosselung zur Verfügung zu stellen.

Die Aufgabe wird gelöst durch die Gegenstände der unabhängigen Ansprüche. Weiterbildungen der Erfindung sind jeweils in den Unteransprüchen angegeben. Dabei können die Gegenstände eines unabhängigen Anspruchs auch durch Merkmale eines anderen unabhängigen Anspruchs oder seiner Unteransprüche weitergebildet sein.

Das erfindungsgemäße Verfahren dient zum Bestimmen von aktuellen und/oder zukünftigen Betriebszuständen einer Windenergieanlage und umfasst die Schritte:
Bereitstellen eines Kl-Modells, wobei das Kl-Modell trainierbar ist, um auf der Basis von eingelesenen Daten, die aktuelle und/oder künftige Umweltparameter und/oder Regeldaten beinhalteten, zumindest einen aktuellen und/oder künftigen Betriebszustand der Windenergieanlage zu bestimmen,
Bestimmen des zumindest einen aktuellen und/oder zukünftigen Betriebszustandes der Windenergieanlage mithilfe des Kl-Modells auf Basis der eingelesenen Umweltparameter und/oder Regeldaten.

Dieses Verfahren ermöglicht es beispielsweise eine Strommengenprognose eines Stromanbieters zuverlässiger abzuschätzen, da für die Abschätzung der erzeugten Energiemenge neben den Umweltbedingungen nun auch die Kombination von Umweltbedingungen und Abschaltvorgaben berücksichtigt werden.

Die aktuellen und/oder künftigen Betriebszuständen einer Windenergieanlage umfassen dabei insbesondere der Ein- und/oder Ausschaltzeiten der Windenergieanlage oder eines ganzen Windparks oder von Teilen eines Windparks und/oder die erzeugte Energiemenge der Windenergieanlage des Windparks oder der Teile des Windparks.

Die Regeldaten können unter anderem Abschaltvorgaben für die Windenergieanlage umfassen.

Somit kann beispielsweise für die Netzbetreiber oder die Direktvermarkter zumindest eine ergänzende Information bereitgestellt werden, dass ein Windrad oder ein Windpark zu einer gewissen Zeit in der Zukunft wahrscheinlich mit Abschaltauflagen bzw. Leistungsreduzierungen rechnen muss.

Durch den Einsatz eines Kl-Modells können nach dem Training auch bisher unvorhergesehene Ereignisse besser vorhergesagt werden, die eine zukünftige Abschaltung erfordern oder verhindern. Das Modell kann auch neue Verknüpfungen zwischen Umgebungsinformationen und Abschaltvorgaben für die Bestimmung von Betriebszuständen erlernen.

Daneben kann auch berechnet werden, ob und welche Auswirkungen auf den Betrieb von Windparks die Änderung von Abschaltvorgaben (Schutzvorgaben für Tiere z.B. Fledermäuse und Vögel) haben und/oder haben werden. Hierbei kann z.B. abgeschätzt werden, welchen Einfluss eine Steigerung der Abschaltvorgaben durch Erhöhung der Schutzvorgaben von Fledermäusen auf den Stromertrag im Jahresverlauf haben wird. Vor allem wird weniger Energie in den sommerlichen Nächten zur Verfügung stehen. Reduzierung von Abschaltvorgaben haben die Auswirkung, dass zum Beispiel mehr und planbarer Energie aus Windparks zur Verfügung steht.

Vorzugsweise ist das KI-Modell ein trainiertes Modell, welches mit in der Vergangenheit aufgenommener Daten, vorzugsweise Umweltparametern und Regeldaten trainiert worden ist. Dadurch können beispielsweise direkt bei erstmaliger Anwendung zuverlässige Betriebszustände bestimmt werden. Die Verwendung von in der Vergangenheit aufgenommenen Daten (historischen Daten) zur Erstellung eines KI-Modells umfasst beispielsweise Informationen, wie Windenergieanlagen, Windparks oder Teilwindparks mit genehmigungsrelevanten Abschaltauflagen auf Wettervorhersagen mit Abschaltungen reagiert haben. Diese Informationen über die Abschaltungen und die Umsetzung der Abschaltauflagen sind in der Datenbank der jeweiligen Abschaltsteuereinrichtungen vorhanden.

Vorzugsweise ist das KI-Modell weiter trainiert, um auf Basis der eingelesenen aktuellen und/oder künftigen Umweltparametern zumindest einen Betriebszustand auszugeben. Dadurch kann das Kl-Modell beispielsweise fortlaufend an den eingelesenen Daten, dem dann resultierenden Verhalten und dem vergangenen Verhalten der Windräder und/oder Windparks verbessert werden.

Als künstlich-intelligentes (Kl) Modell wird eine Software (Computerprogramm) verstanden, die aus Inputdaten Informationen erlernt und basierend darauf entsprechend Outputdaten generiert. Das Kl-Modell kann durch verschiedene Techniken des Machine Learning (ML) wie Supervised Learning, Unsupervised Learning, Reinforcement Learning oder Zeitreihenalgorithmen ausgebildet sein. Das Training des Modells kann mithilfe von vergangenen Daten oder aktuellen Daten erfolgen, um die Leistungsfähigkeit und Genauigkeit des Modells zu verbessern. Dieses Modell kann beispielsweise ein Deep-Learning-Modell sein, bei dem das maschinelle Lernen mittels künstlicher neuronaler Netze erfolgt.

Als Machine Learning (ML) Modell wird ein algorithmisches Konstrukt bzw. eine Software (Computerprogramm) verstanden, das ausgebildet ist, um Muster und Zusammenhänge in Daten zu erkennen, ohne explizit programmierte Regeln zu verwenden. Es basiert auf statistischen Techniken und Algorithmen, die es dem Modell ermöglichen, aus Erfahrungen zu lernen und seine Leistung bei der Verarbeitung von neuen Daten zu verbessern.

Als Reinforcement Learning (RL) wird ein Kl-Modell definiert, welches basierend auf Inputdaten eine Aktion auswählt, mit seiner Umgebung interagiert, Rückmeldungen in Form von Belohnungen oder Bestrafungen erhält und seine Strategie anpasst, um langfristig die Belohnung zu maximieren. Das KI-Modell lernt durch Interaktion mit der Umgebung, ohne auf gelabelte Inputdaten angewiesen zu sein, welche Aktionen in einem gegebenen Zustand die besten Ergebnisse liefern. Eine Aktion stellt den Betriebszustand der Windenergieanlage dar.

Unter einem trainierten Kl-Modell wird beispielsweise verstanden, dass das KI-Modell mit zumindest einem Inputdatenpunkt je Datenkategorie trainiert wurde. Eine Datenkategorie sind beispielsweise Regeldaten und/oder Umweltparameter. Ein Datenpunkt bzw. Inputdatenpunkt, der aus einzelnen oder mehreren Daten je Datenkategorie bestehen kann, ist ein einzelnes Ereignis (Umweltbedingungen oder Regeldaten), das durch einen bestimmten numerischen Wert beschrieben wird.

Das Training eines KI-Modells bezieht sich auf den Prozess, bei dem das Modell auf Grundlage von Inputdaten angepasst wird, um eine spezifische Aufgabe zu erfüllen. In das Modell werden die Inputdaten eingespeist, und seine Parameter werden iterativ angepasst, um die Leistung des Modells zu verbessern. Dies geschieht beispielsweise durch die Minimierung einer Funktion, die den Fehler des Modells misst.

Die Regeldaten umfassen beispielsweise spezifische Abschaltvorgaben für die Windenergieanlage, die von örtlichen und gesetzlichen Anforderungen und/oder Anforderungen zum Schutz von Fledermäusen und/oder Vögeln, und/oder der Reduzierung von Schallimmissionen und/oder Schattenabschaltungen in der Umgebung vorgegeben sind. Weiter können die Regeldaten dynamisch von der Umgebung abhängig sein, vorzugsweise von einer Bewirtschaftung und/oder der sensorgestützten und/oder kamerabasierten Überwachung einer Umgebung der Anlage und/oder der Anlage selbst, und können sich im Laufe der Zeit ändern. Die Abschaltvorgaben können nur eine Windenergieanlage, einzelne Windenergieanlagen eines Windparks oder den gesamten Windpark betreffen.

Die Umweltparameter umfassen sensorisch erfasste und/oder prognostizierte Daten, beispielsweise Windgeschwindigkeit, Temperatur, Niederschlag, Luftfeuchtigkeit oder Helligkeit.

Weiter versteht man unter den Betriebszuständen der Windenergieanlage die folgenden aktuellen und/oder künftigen und/oder vergangenen Statusinformationen. Diese sind beispielsweise: Die erwartete erzeugte elektrische Energie in einem Zeitintervall und/oder die erwartete erzeugte elektrische Leistung zu einem bestimmten Zeitpunkt, definiert durch die Energieausbeute aus den vorherrschenden Windbedingungen des und/oder die Wahrscheinlichkeit für eine Abschaltung der Windenergieanlage zu einer gewissen Zeit oder in einem gewissen Zeitintervall und/oder weitere Meta-Informationen über die Windenergieanlage, vorzugsweise der Grund der Abschaltung und/oder der Dauer der Abschaltung. Die vorhergesagten Betriebszustände können nur eine Windenergieanlage, einzelne Windenergieanlagen eines Windparks oder den gesamten Windpark betreffen.

Unter gelabelten Daten im Kontext des Supervised Learning werden Daten verstanden, bei denen jedem Inputdatenpunkt ein entsprechender Outputdatenpunkt - oder Ziel-Label zugeordnet ist. Diese Ziel-Labels dienen dazu, dem Modell während des Trainings zu zeigen, was es vorhersagen oder lernen soll. Gelabelte Daten sind Daten, die sowohl Inputdaten, beispielsweise Umweltparameter und/oder Regeldaten, als auch zugehörige richtige Ausgaben, beispielsweise Betriebszustände einer Windenergieanlage oder mehrerer Windenergieanlagen oder eines ganzen Windparks enthalten, die das Modell während des Trainings vorhersagen soll. Die gelabelten Daten umfassen, aktuelle und/oder vergangene aufgenommene Daten und die jeweils zugeordneten Betriebszustände, wobei beispielsweise die Zusammenhänge der Daten und Betriebszustände manuell oder automatisch erkannt worden sind und vorzugsweise regelbasiert durch kausale Verknüpfungen klassifiziert werden.

Vorzugsweise ist in dem Verfahren das KI-Modell mit aktuellen und/oder vergangenen aufgenommenen Daten und jeweils zugeordneten Betriebszuständen trainiert worden, wobei die Zusammenhänge der Daten und Betriebszustände manuell erkannt worden sind und vorzugsweise regelbasiert durch kausale Verknüpfungen weiter klassifiziert wurden.

Vorzugsweise umfasst das Verfahren weiter das Bestimmen einer voraussichtlich von der Windenergieanlage erzeugten Energiemenge aus dem bestimmten zumindest einen aktuellen oder zukünftigen Betriebszustand der Windenergieanlage und den aktuellen und/oder künftigen Umweltparametern.

Dadurch ist es zum Beispiel möglich, die Vorhersage der voraussichtlich erzeugten Energiemenge nicht nur auf Wetterprognosen zu stützen, sondern zusätzlich voraussichtlich erfolgende Abschaltungen oder Leistungsreduktionen einzubeziehen.

Vorzugsweise wird in dem Verfahren das KI-Modell während des Bestimmens des zumindest eines Betriebszustandes der Windenergieanlage fortlaufend weiter trainiert.

Vorzugsweise wird in dem Verfahren ein Betriebszustand der Windenergieanlage automatisch und/oder teilautomatisch und/oder manuell mithilfe einer Schnittstelle, vorzugsweise einem Mail Client und/oder einer API-Schnittstelle und/oder einem direkten Datenausgang ausgegeben und/oder vor Ort bzw. überall bereitgestellt.

Weitere Merkmale und Zweckmäßigkeiten der Erfindung ergeben sich aus der Beschreibung von nicht einschränkenden Ausführungsformen anhand der beigefügten Figuren.
- Fig. 1: zeigt eine schematische Darstellung einer Windenergieanlage und eines Kl-Modells zur Bestimmung von künftigen Betriebszuständen auf der Basis von Umweltparametern und Regeldaten gemäß einer ersten Ausführungsform der vorliegenden Erfindung.
- Fig. 2: zeigt ein Flussdiagramm, das die Bestimmung von künftigen Betriebszuständen anhand der eingelesenen Daten durch das KI-Modell veranschaulicht.
- Fig. 3: zeigt eine schematische Darstellung einer Windenergieanlage und dem KI-Modell zur Bestimmung von künftigen Betriebszuständen auf der Basis von Umweltparametern und Regeldaten gemäß einer zweiten Ausführungsform der vorliegenden Erfindung, wobei beide Datenkategorien dynamisch mit Hilfe der Sensoren der Windenergieanlage angepasst werden.
- Fig. 4: zeigt eine schematische Darstellung einer Windenergieanlage und dem KI-Modell, welches zentral in einem Rechenzentrum untergebracht ist, zur Bestimmung von künftigen Betriebszuständen auf der Basis von Umweltparametern und Regeldaten gemäß einer dritten Ausführungsform der vorliegenden Erfindung

Im Folgenden werden mit Bezug auf die beigefügten Figuren konkrete, nicht einschränkende Ausführungsformen der vorliegenden Erfindung beschrieben.

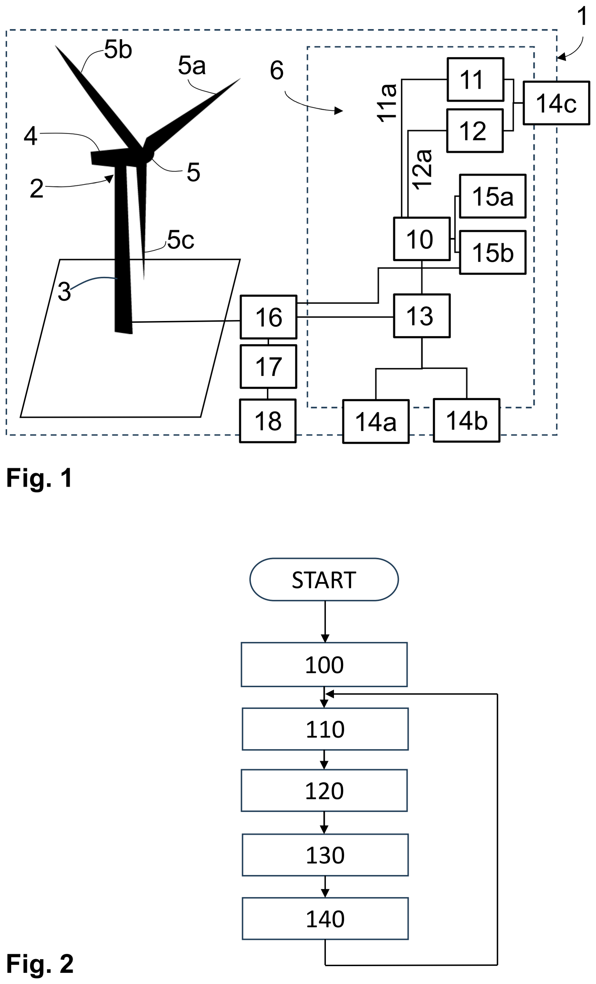

Fig. 1 zeigt eine schematische Darstellung einer Windenergieanlage und eines Kl-Modells gemäß einer ersten Ausführungsform. Sie dient zur Bestimmung von künftigen Betriebszuständen auf der Basis von Umweltparametern und Regeldaten.

Ein Windpark 1 umfasst wenigstens eine Windenergieanlage (Windrad) 2. Die Windenergieanlage 2 enthält einen Turm 3, eine Maschinengondel 4 und einen Rotor 5 mit Rotorblättern 5a, 5b, 5c. Anstelle der in der Figur gezeigten drei Rotorblätter 5a, 5b, 5c. kann die Windenergieanlage 2 auch weniger oder mehr Rotorblätter aufweisen. In der Figur ist eine einzelne Windenergieanlage 2 dargestellt. Zur Vereinfachung wird im Folgenden ebenfalls ein Fall beschrieben, in dem der Windpark 1 nur eine einzelnen Windenergieanlage 2 umfasst. Das Ausgeführte gilt jedoch entsprechend, wenn der Windpark eine Mehrzahl von Windenergieanlagen umfasst.

Der Windpark 1 enthält ferner einen Windparkserver 16, der den Betrieb der Windenergieanlage 2 steuert und Daten von ihr empfängt, sowie eine Steuereinheit 17 zum Umsetzen von Abschaltalgorithmen, beispielsweise zum Zweck des Tierschutzes. Die Steuereinheit 17 kann auch in dem Windparkserver 16 integriert sein. Die Steuereinheit ist ferner mit einer Netzwerkschnittstelle 18 verbunden, die für den Datenversand, die Datenbereitstellung für andere Systeme oder für die Überwachung eine Verbindung zum Internet herstellt. Sie kann beispielsweise dazu dient, einen Betriebszustand des Windparks 1 auszulesen oder den Windpark 1 zu steuern. Die Netzwerkschnittstelle 18 kann auch zwischen der Steuereinheit 17 und dem Windparkserver 16 angeordnet sein und von beiden gemeinsam genutzt werden. Alternativ kann statt einer gesonderten Netzwerkschnittstelle 18 auch eine bereits in dem Windparkserver 16 vorhandene Netzwerkschnittstelle gemeinsam genutzt werden.

Die Steuereinheit 17 kann auch ohne Windparkserver 16 direkt mit dem einen oder jedem Windrad im Windpark kommunizieren, von dort Daten empfangen und/oder Befehle vorgeben.

Schließlich enthält der Windpark 1 ein Kl-Modell 10, welches so ausgebildet ist, dass auf Basis von eingelesenen aktuellen und/oder künftigen Daten, vorzugsweise Umweltparametern und/oder Regeldaten, die beispielsweise auch Abschaltvorgaben umfassen, zumindest ein Betriebszustand bestimmt werden kann. Das Kl-Modell und die dazugehörigen Komponenten sind in einer Vorhersageeinrichtung 6 zusammengefasst. Die Vorhersagen können auf Grundlage von Erfahrungen aus vergangenen Daten optimiert werden.

Die aktuellen und/oder künftigen Daten umfassen einerseits Umweltparameter 11a und/oder andererseits Regeldaten 12a. Diese können aus einem Speichermodul 11 für die Umweltparameter 11a und/oder einem Speichermodul 12 für die Regeldaten ein- und ausgelesen werden. Die Speichermodule 11, 12 können auch zusammengefasst sein.

Das KI-Modell 10 kann einerseits als Machine Learning (ML) -Modell ausgebildet sein, welches mittels Daten aus einem Speichermodul vergangener aufgenommener Daten 15a, vorzugsweise Umweltparameter und/oder Regeldaten und mit Daten aus einem Speichermodul der jeweils zugeordneten Betriebszuständen 15b dazu trainiert wurde aus den Umweltparametern 11a und/oder den Regeldaten 12a Betriebszustände zu bestimmen, wobei die Bestimmung vorzugsweise mit einem Supervised Learning Ansatz durchgeführt wird, beispielsweise mit folgenden Schritten: Dem Einlesen von vergangenen und/oder aktuellen Umweltparameter aus einem Speichermodul (15a), dem Einlesen von vergangenen und/oder aktuellen Regeldaten aus einem Speichermodul (15a), dem Verknüpfen der Umweltparameter und/oder Regeldaten mit den zeitlich zugeordneten Betriebszuständen (15b) der Windenergieanlage, sodass gelabelte Trainingsdaten erhalten werden und dem trainieren des KI-Moduls (10) anhand der gelabelten Trainingsdaten. Dabei wurden die Zusammenhänge der Daten und Betriebszustände manuell erkannt und werden vorzugsweise regelbasiert durch kausale Verknüpfungen klassifiziert, weiter bevorzugt werden die Zusammenhänge durch ihre zeitliche Koinzidenz (Umweltparameter zum Zeitpunkt A verknüpft mit dem Betriebszustand zum Zeitpunkt A) verknüpft. Weiter kann als Supervised ML-Modell, bei dem das Modell mit gelabelten Daten trainiert wird, vorzugsweise ein Deep Feed Forward Netzwerk, ein Deep Neural Network oder Convolutional Neural Network verwendet werden, um die Zusammenhänge zwischen den in der Vergangenheit aufgenommenen Daten und den Betriebszuständen der Windenergieanlage zu lernen. Als Alternative wird das Kl-Modell auch erst mit aktuellen Daten trainiert. Der Windparkserver kann dazu mit dem Speichermodul 15b verbunden werden.

Das KI-Modell 10 kann andererseits auf einem Unsupervised Learning Modell basieren, vorzugsweise dem Clustering oder Gaussian Mixture, und mittels Daten aus dem Speichermodul vergangenen aufgenommenen Daten 15a, vorzugsweise Umweltparameter und/oder Regeldaten trainiert worden sein, um Muster in den Daten zu erkennen und die aktuellen und/oder künftigen Betriebszustände der Windenergieanlage zu bestimmen. Als Alternative wird das Kl-Modell auch erst mit aktuellen Daten trainiert. Beispielsweise wird ein Fully-Connected Autoencoder Netzwerk verwendet, welches die Datenmengen auf die wichtigsten Eigenschaften (durch Clustering) reduziert. PyTorch eignet sich beispielsweise hervorragend zur Implementierung eines Fully Connected Autoencoder Netzwerks, da es flexible und leistungsstarke Werkzeuge für den Aufbau, das Training und die Optimierung solcher Modelle bietet.

Das KI-Modell 10 kann andererseits als ML-Modell ausgebildet sein, welches mittels Reinforcement Learning auf der Basis von aktuellen und/oder vergangenen aufgenommenen Daten dazu trainiert wurde aus Umweltparametern und/oder Regeldaten Betriebszustände zu bestimmen, wobei das KI-Modell basierend auf den Inputdaten eine Aktion bzw. ein Betriebszustand auswählt, mit seiner Umgebung interagiert, daraufhin Rückmeldungen in Form von Belohnungen oder Bestrafungen erhält und das Kl-Modell anpasst, um langfristig die Belohnung zu maximieren. Das KI-Modell ist in dieser Ausbildungsform nicht auf Trainingsdaten angewiesen, sondern lernt lediglich über das beschriebene Belohnungssystem. Beispielsweise eignet sich PyTorch hervorragend zur Implementierung eines Deep-Feed-Forward Netzwerks, das mittels Proximal Policy Optimization (PPO) eine Strategie erlernt, unter welchen Umständen am besten abgeschaltet werden sollte bzw. wie die genaueste Vorhersage für eine kommende Abschaltung getroffen werden kann. (Dabei sind Zeitpunkt ggf. relevant und/oder die Wahrscheinlichkeit einer Abschaltung bzw. Nichtabschaltung über eine gewisse Zeitspanne).

Das KI-Modell 10 kann alternativ durch Zeitreihenalgorithmen ausgebildet sein. Zeitreihenalgorithmen, wie ein Long Short-Term Memory (LSTM) Netzwerk, bieten den Vorteil, dass zeitliche Abhängigkeiten in den Daten kontinuierlich erfasst werden können. Im Gegensatz zu herkömmlichen Machine Learning-Ansätzen, bei denen Zeitfenster erzeugt und einzeln ausgewertet werden, lernt ein LSTM-Netzwerk die zeitlichen Muster direkt aus den Daten. Dabei bleibt der Ansatz weiterhin überwacht (Supervised Learning), indem vergangene Umweltparametern und/oder Regeldaten und vergangene Abschaltungen genutzt werden, um das Modell zu trainieren und präzise Vorhersagen zu ermöglichen.

Ein mögliches Ausführungsbeispiel zeigt, wie bestimmte Umweltparameter und Abschaltvorgaben zu einer Abschaltung oder Prognose der Abschaltung führen können. Beispielsweise kann die Temperatur als Umweltparameter dienen: Wenn die Temperatur über 23 Grad Celsius liegt, könnte beispielsweise eine positive Korrelation zur Abschaltung in den nächsten 4 Tagen bestehen. Ein weiterer relevanter Parameter ist die Windgeschwindigkeit. Bei mittelstarkem Wind, etwa 10-20 km/h, könnte beispielsweise eine negative Korrelation zur Abschaltung für die nächsten 2 Tage bestehen. Im Gegensatz dazu könnte sehr starker Wind, beispielsweise über 50 km/h, beispielsweise eine positive Korrelation zur Abschaltung in den nächsten 24 Stunden zeigen, wobei die Wahrscheinlichkeit zwischen 21 und 23 Uhr besonders hoch ist.

Zusätzlich können vergangene Bewirtschaftungsdetektionen Einfluss auf die Abschaltprognose haben. Eine hohe Anzahl und bestimmte Arten von Detektionen (Zustand des Feldes, Bewirtschaftung des Feldes, etc.) in der Vergangenheit könnten eine erhöhte Wahrscheinlichkeit für eine bevorstehende Abschaltung signalisieren. Erfahrungen aus zeitlichen Zusammenhängen und/oder Wettereinflüsse auf bestimmte Bewirtschaftungsvorgänge können ebenfalls Einfluss auf die Wahrscheinlichkeit möglicher Abschaltungen für den Vogelschutz haben. Z.B. werden Wiesen in nahezu gleichen Zeitintervallen gemäht oder Felder mit wiederkehrenden Feldfrüchten in vergleichbaren Zeitabständen bestellt, wobei hier Wettereinflüsse kleine Verschiebungen hervorrufen können. In einem nassen Frühjahr kann das Sähen etwas später stattfinden. Dafür kann in einem trockenen Sommer die Ernte und/oder die bodenwendende Maßnahme etwas früher im Jahr stattfinden. Des Weiteren können externe oder interne Wetterdaten als Inputdaten in das Modell gespeist werden. Wenn extreme Wetterbedingungen wie Stürme oder Hitzewellen vorhergesagt werden, könnte beispielsweise die Wahrscheinlichkeit einer Abschaltung steigen oder sinken.

Schließlich kann auch das Datum als Parameter berücksichtigt werden. An bestimmten Tagen, wie beispielsweise dem 24. Dezember, könnte eine Abschaltung für einen Zeitraum von 1 bis 12 Wochen sehr unwahrscheinlich sein. Diese Beispiele verdeutlichen, wie das Netz verschiedene Umweltparameter und historische Daten intelligent zusammenführt, um fundierte Prognosen über bevorstehende Abschaltungen zu erstellen.

Die bestimmten, vorzugsweise berechneten Betriebszustände des trainierten Kl-Modells auf Basis der eingelesenen Umweltparametern 11a und/oder Regeldaten 12a einer Windenergieanlage werden in einem Output Modul 13 des Kl-Modells 10 gespeichert. Das Output Modul 13 kann auch in dem KI-Modell 10 integriert sein.

Die bestimmten Betriebszustände der Windenergieanlage werden automatisch und/oder teilautomatisch und/oder manuell mithilfe eines Mail Clients 14a direkt versendet. Neben dem Mail Client 14a kann auch eine API-Schnittstelle 14b verwendet werden, aus der die bestimmten Betriebszustände ausgelesen werden können. Die Schnittstellen 14a und 14b können auch in einer Schnittstelle 14 integriert sein und vor Ort im Windpark oder an einer anderen Stelle auf der Welt zur Verfügung stehen.

Zudem können die Umweltparameter sowie Regeldaten über eine Schnittstelle 14c ausgelesen oder eingelesen werden. Die Umweltparameter und/oder Regeldaten können von einer externen Quelle, beispielsweise einer Datenbank bezogen werden. Die Schnittstelle kann auch dazu genutzt werden, die aktuell in den Speichermodulen 11, 12 befindlichen Daten von einem externen Zugang, beispielsweise einer Leitstelle auszulesen.

Fig. 2 zeigt ein Flussdiagramm, das die Bestimmung von künftigen Betriebszuständen anhand der eingelesenen Daten durch das KI-Modell veranschaulicht.

Im Schritt 100 wird ein Kl-Modell 10 bereitgestellt, welches so ausgebildet ist, dass auf Basis von eingelesenen aktuellen und/oder künftigen Daten zumindest einen Betriebszustand bestimmt wird. Das KI-Modell, basiert auf einem ML-Modell, welches mit unterschiedlichen Techniken, wie dem Supervised Learning, Unsupervised Learning, Zeitreihenalgorithmen oder dem Reinforcement Learning (RL) ausgebildet sein kann. Abhängig von der verwendeten Technik, wird das KI-Modell entweder mittels in der Vergangenheit aufgenommenen Daten, vorzugsweise Umweltparametern und/oder Regeldaten und jeweils zugeordneten Betriebszuständen trainiert oder lediglich mittels in der Vergangenheit aufgenommenen Daten, vorzugsweise Umweltparametern und/oder Regeldaten trainiert.

Alle weiteren Merkmale bezüglich der verwendeten KI-Technik, des Trainings des KI-Modells und der verwendeten Daten entsprechen denen der ersten Ausführungsform gemäß Figur 1.

Im Schritt 110 werden aktuelle und/oder künftige Umweltparametern in das trainierte KI-Modell eingelesen. Die Umweltparameter können aus dem Speichermodul 11 oder direkt über die Schnittstelle 14c von einer externen Quelle, beispielsweise einer Leitstelle oder einer Datenbank, eingelesen werden.

Im Schritt 120 werden Regeldaten in das trainierte Kl-Modell eingelesen. Die Regeldaten können aus dem Speichermodul 12 oder direkt über die Schnittstelle 14c von einer externen Quelle, beispielsweise einer Leitstelle oder einer Datenbank, eingelesen werden.

Im Schritt 130 wird zumindest ein Betriebszustand einer Windenergieanlage mithilfe des trainierten Kl-Modells auf Basis der eingelesenen Umweltparametern und/oder Regeldaten bestimmt.

Im Schritt 140 wird eine Meldung ausgegeben, die den bestimmten Betriebszustand ausgibt.

Basierend auf den aktuellen und/oder künftigen Umweltparametern und/oder Regeldaten und im Falle des Supervised Learning den zugehörigen Betriebszuständen einer Windenergieanlage, kann das KI-Modell kontinuierlich weiter trainiert werden.

Das KI-Modell 10 kann sowohl beim Supervised Learning als auch beim Unsupervised Learning die Möglichkeit besitzen, fortlaufend zu lernen, allerdings auf unterschiedliche Weise und unter verschiedenen Voraussetzungen.

Beim Supervised Learning lernt ein Kl-Modell anhand eines Datensatzes, der sowohl Eingaben (Inputs) als auch die dazugehörigen Ausgaben (Outputs) beinhaltet. Das Modell wird trainiert, indem es die Abweichung zwischen seinen Vorhersagen und den tatsächlichen Ergebnissen minimiert. Fortlaufendes Lernen in einem solchen Modell bedeutet, dass es kontinuierlich mit neuen Daten trainiert wird, die sowohl Eingaben als auch korrespondierende Ausgaben beinhalten. Dazu müssen die Vorhersagen manuell durch menschliche Nutzer oder automatisiert validiert werden. Diese neuen validierte Daten werden in Echtzeit oder in kleinen Batches erneut vor dem Schritt 110 eingelesen, damit das Modell seine Vorhersagen fortlaufend verbessern kann.

Im Gegensatz dazu wird beim Unsupervised Learning kein gelabelter Datensatz mit bekannten Ausgaben für das Training verwendet. Stattdessen versucht das System, in den Daten vorhandene Muster oder Strukturen selbstständig zu identifizieren und zu lernen. Fortlaufendes Lernen beim Unsupervised Learning bedeutet, dass in das Modell im Schritt 110 kontinuierlich neue Daten eingelesen werden, um es robuster gegenüber der Entwicklung oder Veränderung von Mustern oder Strukturen zu machen. Dies kann beispielsweise beim Clustering sehr nützlich sein.

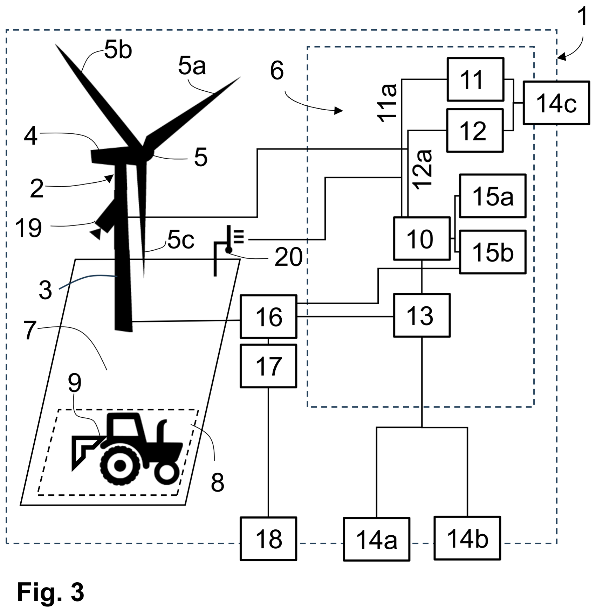

Fig. 3. zeigt eine schematische Darstellung einer Windenergieanlage und eines Kl-Modell gemäß einer zweiten Ausführungsform. Sie dient zur Bestimmung von künftigen Betriebszuständen auf der Basis von Umweltparametern und/oder Regeldaten, wobei beide Datenkategorien dynamisch von den Sensoren der Windenergieanlage angepasst werden können. Alle weiteren Merkmale entsprechen denen der ersten Ausführungsform.

In dieser Ausführungsform können die Umweltparameter 11a neben den Prognosen oder aktuell übermittelten Echtzeit Umweltparameter zusätzlich von zumindest einem Sensor 20 oder einer Kombination der im Folgenden gelisteten Sensoren an der Windenergieanlage und/oder in deren Umgebung erfolgen. Der Sensor 20 kann beispielsweise durch ein Windmessgerät ausgebildet sein, welches die aktuelle Windgeschwindigkeit und/oder Richtung misst. Weiter kann der Sensor beispielsweise als Temperatur- oder Niederschlags- oder Feuchtesensor ausgebildet sein. Der Begriff Sensor kann sowohl einen einzelnen Sensor eines Typs als auch mehrere Sensoren eines oder verschiedener Typen umfassen. Aus den aufgenommen Umweltparametern kann eine Wetterprognose oder Abschaltprognose erstellt werden, die in den Datensatz der Umweltparameter 11a aufgenommen wird. Zusätzlich können die aufgenommenen Umweltparameter verwendet werden, um die Regeldaten, insbesondere die spezifischen Abschaltvorgaben für Windenergieanlagen zu bilden oder erweitern.

Zusätzlich können in dieser Ausführungsform die Regeldaten 12a, insbesondere die spezifischen Abschaltvorgaben für Windenergieanlagen durch eine computerbasierte Objekterkennung mittels eines Sensors 19, vorzugsweise einer Kamera ergänzt werden. Der Sensor 19 kann an der Windenergieanlage 2 und/oder in deren Umgebung platziert sein. Wird ein zur Bewirtschaftung der Umgebung 7 dienendes Objekt 9 in den von der Kamera empfangenen Bildern und/oder Videosequenzen erkannt, kann diese Information, sofern sie die Abschaltung der Windenergieanlage betrifft, oder betreffen wird den Regeldatensatz bilden oder ergänzen. Eine KI gestützte Objekterkennung, kann dabei verwendet werden, die Sensor Daten automatisch zu verarbeiten und beispielsweise ein auf einem Flurstück 8 fahrenden Traktor 9, Feldmaschinen, Vögel oder andere abschaltungsrelevante Objekte zu klassifizieren. Diese verarbeiteten Informationen können den Regeldatensatz bilden oder ergänzen.

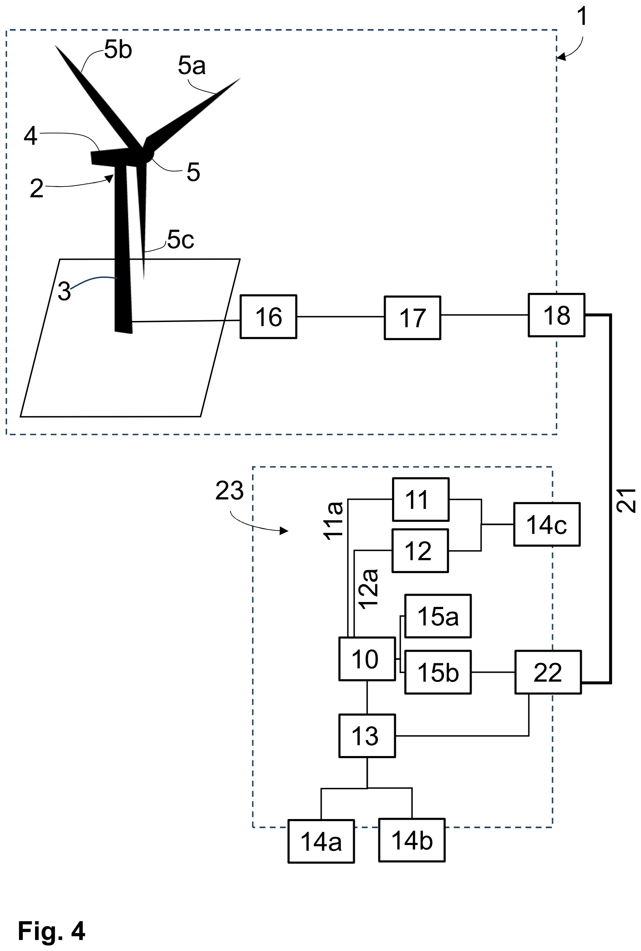

Fig 4. zeigt eine schematische Darstellung einer Windenergieanlage 2 und dem Kl-Modell 10 gemäß einer dritten Ausführungsform. Dabei ist das Kl-Modell zur Bestimmung von künftigen Betriebszuständen auf der Basis von Umweltparametern und Regeldaten zentral in einem Rechenzentrum 23 untergebracht. Alle weiteren Merkmale entsprechen denen der ersten Ausführungsform.

Die Netzwerkschnittstelle 18 des Windparks 1 ist über eine Netzwerkverbindung 21 mit einer Netzwerkschnittstelle 22 des Rechenzentrums 23 verbunden. Das in Fig. 4 gezeigte Rechenzentrum 23 enthält das Kl-Modell 6 aus Fig. 1. Das Rechenzentrum 23 kann beispielsweise als Docker auf Amazon Web Services (AWS) oder als Google Cloud oder als ein beliebiger Server, oder als Funktion as a Service in einer Cloud ausgebildet sein.

In dieser Ausführungsform übernimmt das Rechenzentrum 23 die Funktionen der Betriebszustandsbestimmung des Windparks.

In allen Ausführungsformen wird somit jeweils eine Vorrichtung und ein Verfahren bereitgestellt, die dazu ausgebildet sind, Betriebszustandsänderungen aufgrund von Erfahrungen und Umwelteinflüssen vorherzusagen.

## Patentansprüche

1. Computerimplementiertes Verfahren zur Bestimmung von aktuellen und/oder künftigen Betriebszuständen einer Windenergieanlage, umfassend folgende Schritte:
Bereitstellen eines Kl-Modells (10), wobei das Kl-Modell (10) trainierbar ist, um auf der Basis von eingelesenen Daten, die aktuelle und/oder künftige Umweltparameter (11a) und/oder Regeldaten (12a) beinhalteten, zumindest einen aktuellen und/oder künftigen Betriebszustand der Windenergieanlage (2) zu bestimmen;
Bestimmen des zumindest einen aktuellen oder zukünftigen Betriebszustandes der Windenergieanlage (2) mithilfe des Kl-Modells (10) auf Basis der eingelesenen Umweltparametern (11a) und/oder Regeldaten (12a).

2. Verfahren nach Anspruch 1, wobei das Kl-Modell (10) ein trainiertes Kl-Modell ist, welches mit in der Vergangenheit aufgenommenen Daten (15a), vorzugsweise Umweltparametern und/oder Regeldaten und/oder den Betriebsdaten der Windenergieanlage oder vergleichbarer Windenergieanlagen trainiert worden ist.

3. Verfahren nach Anspruch 1 oder 2, wobei das Kl-Modell (10) ausgebildet ist, auf Basis der eingelesenen aktuellen und/oder künftigen Umweltparametern (11a) und/oder Regeldaten (12a) zumindest einen Betriebszustand auszugeben.

4. Verfahren nach Anspruch 1 oder 3, wobei in das Kl-Modell (10) aktuelle und/oder künftige Umweltparameter (11a) und/oder Regeldaten (12a) eingelesen werden

5. Verfahren nach einem der Ansprüche 1 bis 4, wobei die Umweltparameter (11a) sensorisch erfasste (20) und/oder prognostizierte (11) Eingangsdaten, vorzugsweise Windgeschwindigkeit, Temperatur, Niederschlag, Windrichtung, Sturmvorhersage, Helligkeit oder Sonneneinstrahlung und/oder Luftfeuchtigkeit umfassen.

6. Verfahren nach einem der Ansprüche 1 bis 5, wobei die Regeldaten (12a) spezifische Abschaltvorgaben für die Windenergieanlage (2) umfassen, die von örtlichen und gesetzlichen Anforderungen und/oder Anforderungen zum Schutz von Tieren, vorzugsweise von Fledermäusen oder Vögeln, und/oder der Reduzierung von Schallimmissionen und/oder Schattenabschaltungen in der Umgebung (7) vorgegeben sind, und/oder
wobei die Regeldaten (12a) dynamisch von der Umwelt abhängen, vorzugsweise von der Bewirtschaftung und/oder von der sensorisch (19) basierten Überwachung der Umgebung (7) der Anlage und/oder der Anlage (2) selbst und sich mit der Zeit ändern.

7. Verfahren nach einem der Ansprüche 1 bis 6, wobei ein Betriebszustand der Windenergieanlage (2) die erwartete erzeugte elektrische Energie in einem Zeitintervall sowie die erwartete erzeugte elektrische Leistung zu einem bestimmten Zeitpunkt und/oder die Wahrscheinlichkeit für eine Abschaltung der Windenergieanlage (2) zu einer gewissen Zeit oder in einem gewissen Zeitintervall und/oder weitere Meta-Informationen über die Windenergieanlage (2), vorzugsweise den Grund der Abschaltung oder die Dauer der Abschaltung, beinhaltet.

8. Verfahren nach einem der Ansprüche 1 bis 7, wobei das KI-Modell (10) als ML-Modell ausgebildet ist, welches mittels aktuellen und/oder vergangenen aufgenommenen Daten und jeweils zugeordneten Betriebszuständen dazu trainiert wurde aus Umweltparametern (11a) und/oder Regeldaten (12a) Betriebszustände zu bestimmen, wobei die Bestimmung vorzugsweise mit einem Supervised Learning Ansatz durchgeführt wird, bei dem das Modell mit gelabelten Daten trainiert wird, wie vorzugsweise einem Deep Feed Forward Netzwerk, Deep Neural Network oder Convolutional Neural Network, um die Zusammenhänge zwischen den in der Vergangenheit aufgenommenen Daten und den Betriebszuständen der Windenergieanlage (2) zu lernen.

9. Verfahren nach einem der vorhergehenden Ansprüche, wobei das Kl-Modell (10) als ML-Modell ausgebildet ist, welches mittels Zeitreihenalgorithmen dazu trainiert wurde, zeitliche Abhängigkeiten aus den Umweltparametern (11a) und/oder Regeldaten (12a) kontinuierlich zu erkennen und aktuelle und/oder zukünftige Betriebszustände zu bestimmen, wobei vorzugsweise ein Long Short-Term Memory (LSTM)-Netzwerk die zeitlichen Abhängigkeiten in einem Supervised Learning Ansatz direkt aus den Daten erlernt, indem aktuelle und/oder vergangene aufgenommene Daten und jeweils zugeordnete Betriebszustände zum Trainieren des Modells genutzt werden.

10. Verfahren nach einem der vorhergehenden Ansprüche, wobei das KI-Modell (10) als ML-Modell ausgebildet ist, welches mittels Reinforcement auf der Basis von aktuellen und/oder vergangenen aufgenommenen Daten dazu trainiert wurde aus Umweltparametern (11a) und/oder Regeldaten (12a) aktuelle und/oder zukünftige Betriebszustände zu bestimmen, wobei das KI-Modell (10) basierend auf den Inputdaten eine Aktion bzw. ein Betriebszustand auswählt, mit seiner Umgebung interagiert, daraufhin Rückmeldungen in Form von Belohnungen oder Bestrafungen erhält und das Kl-Modell (10) anpasst, um langfristig die Belohnung zu maximieren.

11. Verfahren nach einem der Ansprüche 1 bis 10, wobei das Kl-Modell (10) als ML-Modell ausgebildet ist, welches mittels aktuellen und/oder vergangenen aufgenommenen Daten dazu trainiert wurde aus Umweltparametern (11a) und/oder Regeldaten (12a) aktuelle und/oder zukünftige Betriebszustände zu bestimmen, wobei die Bestimmung vorzugsweise mit einem Unsupervised Learning Modell durchgeführt wird, in weiter bevorzugter Weise Clustering oder Gaussian Mixture, um Muster in den Daten zu erkennen und die aktuellen und/oder künftigen Betriebszustände der Windenergieanlage (2) zu bestimmen.

12. Verfahren nach einem der vorhergehenden Ansprüche, weiter umfassend das Bestimmen einer voraussichtlich von der Windenergieanlage erzeugten Energiemenge aus dem bestimmten zumindest einen aktuellen oder zukünftigen Betriebszustand der Windenergieanlage und den aktuellen und/oder künftigen Umweltparametern (11a).

13. Verfahren zum Trainieren eines Kl-Modells zur Bestimmung von Betriebszuständen einer Windenergieanlage, umfassend folgende Schritte:
Einlesen von vergangenen und/oder aktuellen Umweltparameter aus einem Speichermodul (15a) und/oder einem Sensor (20),
Einlesen von vergangenen und/oder aktuellen Regeldaten aus einem Speichermodul (15a) und/oder einem Sensor (19),
Verknüpfen der Umweltparameter und Regeldaten mit den zeitlich zugeordneten Betriebszuständen (15b) der Windenergieanlage, sodass gelabelte Trainingsdaten erhalten werden,
Trainieren des KI-Moduls (10) anhand der gelabelten Trainingsdaten.

14. Vorrichtung zur Bestimmung von aktuellen und/oder künftigen Betriebszuständen einer Windenergieanlage (2), umfassend:
einen Prozessor, welcher ausgebildet ist, ein trainierbares Kl-Modell (10) ablaufen zu lassen, um auf der Basis von eingelesenen Daten, die aktuelle und/oder künftige Umweltparameter (11a) und/oder Regeldaten (12a) beinhalten, zumindest einen aktuellen und/oder künftigen Betriebszustand der Windenergieanlage zu bestimmen;
eine Ausgabe-Schnittstelle (14a), (14b), die ausgebildet ist, den berechneten Betriebszustand auszugeben.

15. Vorrichtung nach Anspruch 14, wobei eine Einlese-Schnittstelle, zum Einlesen von aktuellen und/oder künftigen Umweltparametern (11a) in das trainierbare Kl-Modell (10) ausgebildet ist; und/oder
wobei zumindest ein Speichermodul (11), (12) und/oder eine Schnittstelle (14c) ausgebildet ist, welches die einzulesenden Daten speichert oder von einer externen Quelle bezieht, und/oder
wobei die Ausgabeschnittstelle (14a), (14b) die bestimmten Betriebszustände der Windenergieanlage automatisch und/oder teilautomatisch und/oder manuell, vorzugsweise einem Mail Client (14a) und/oder einer API-Schnittstelle (14b) ausgibt.
